# EUROPÄISCHE PATENTANMELDUNG

(11) **EP 0 590 528 A1**
(43) Veröffentlichungstag der Anmeldung: **06.04.1994**
(21) Anmeldenummer: 93115408.2
(22) Anmeldetag: 24.09.1993
(51) Int. Cl.: B60G 11/46, B60G 9/00

(54) **Achseinbindung**

(30) Priorität: 30.09.1992 DE 4232778
(71) Anmelder: BPW Bergische Achsen Kommanditgesellschaft, D-51674 Wiehl (DE)
(72) Erfinder: Laudszun, Heinz, Dr., D 51674 WIEHL (DE); Steiner, Helmut, D 51674 WIEHL (DE)
(74) Vertreter: Stenger, Watzke & Ring Patentanwälte

(57) **Zusammenfassung**

Gegenstand der Erfindung ist eine Achseinbindung für Luft- oder Blattfederachsen mit einem als Vierkantrohr mit abgerundeten Kanten ausgebildeten Achskörper (5), den Achskörper (5) an der Ober- oder Unterseite kreuzenden Längslenkern (4) oder Blattfedern sowie diese Konstruktionsteile unter Zwischenlage von Achsplatten (21), Federplatten (22) und Fülstücken (23) umgreifende U-förmige Federbügel (24) mit Sicherungsmuttern (25). Um eine Achseinbindung mit Kraft- und Formschluß ohne Schweißverbindung zu schaffen, die sowohl für Luft- als auch für Blattfederachsen geeignet ist, wird vorgeschlagen, daß die Achsplatten (21) den konvex abgerundeten Kanten des Achskörpers (5) mit entsprechend konkav geformten Druckflächen (28) anliegen und daß auf der Oberseite des Achskörpers (5) Zentrierringe (26) befestigt sind, die in entsprechend geformte Ausnehmungen (27) der Achsplatten (21) oder Füllstücke (23) eingreifen.

## Beschreibung

Gegenstand der Erfindung ist eine Achseinbindung für Luft- oder oder Blattfederachsen mit einem als Vierkantrohr mit abgerundeten Kanten ausgebildeten Achskörper, den Achskörper an der Ober- oder Unterseite kreuzenden Längslenkern oder Blattfedern sowie diese Konstruktionsteile unter Zwischenlage von Achsplatten, Federplatten und Füllstücken umgreifende, U-förmige Federbügel mit Sicherungsmuttern.

Eine Luftfederachse der vorstehend beschriebenen Gattung ist beispielsweise aus dem DE 87 16 234 U1 bekannt. Bei dieser bekannten Luftfederachse ist der Achskörper im Abstand vor den senkrechten Mittelteilen unter den vorderen Federästen der Längslenker befestigt. Die Befestigungsvorrichtungen bestehen aus am Achskörper angeschweißten Achslappen mit U-förmigem Profil, welche die Längslenker von unten her umgreifen, Federplatten mit U-förmigem Profil, welche die Längslenker von oben her umgreifen, U-förmigen Federbügeln und Sicherungsmuttern sowie zwischen dem Achskörper und den Federbügeln eingelegten Füllstücken. Bei dieser bekannten Achseinbindung übernimmt der zwischen den beiden, als Längslenker wirkenden vorderen Federästen eingespannte Achskörper im dynamischen Fahrbetrieb die Aufgabe eines Stabilisators. Die auftretenden Torsions- und Biegemomente werden über die Schweißnähte des Achslappens auf den Achskörper übertragen. Aus diesem Grunde muß die Wandstärke des Achskörpers überdimensioniert sein, um Brüche im Bereich der Schweißnähte zu vermeiden. Ein weiterer Nachteil dieser bekannten Achseinbindung besteht darin, daß für Luft- und Blattfederachsen Achskörper mit unterschiedlich geformten und angeschweißten Achslappen bevorratet werden müssen.

Davon ausgehend liegt der Erfindung die **Aufgabe** zugrunde, eine Achseinbindung mit Kraft- und Formschluß ohne Schweißverbindung zu schaffen, die sowohl für Luft- als auch für Blattfederachsen verwendbar ist, und zwar unabhängig davon, ob die Längslenker der Luftfederachse und die Blattfedern der Blattfederachse den Achskörper an der Ober- oder Unterseite kreuzen.

Als technische **Lösung** wir dafür vorgeschlagen, daß die Achslappen den konvex abgerundeten Kanten des Achskörper mit entsprechend konkav geformten Druckflächen anliegen und daß auf der Oberseite des Achskörpers Zentrierringe befestigt sind, die in entsprechend geformte Ausnehmungen der Achsplatten oder Füllstücke eingreifen.

Eine nach dieser technischen Lehre ausgebildete Luftfederachse hat im Vergleich zum Stand der Technik den **Vorteil,** daß der Achskörper schweißnahtfrei mit den sich an seinen konvex abgerundeten Kanten kraft- und formschlüssig abstützenden Achsplatten eingebunden ist. Dabei übernehmen die auf der Oberseite des Achskörpers befestigten, vorzugsweise auch angeschweißten Zentrierringe nur die Seitenkräfte bei Kurvenfahrt, ohne an der Übertragung von Torsions- und Biegemomentan auf den Achskörper beteiligt zu sein. Durch die schweißnahtfreie Einbindung ergibt sich die Möglichkeit für eine Gewichtseinsparung beim Achskörper durch Reduzierung seiner Wandstärke.

Ein weiterer, insbesondere ökonomischer **Vorteil** besteht darin, daß die gleiche Achskörperkonstruktion mit den auf der Oberseite befestigten Zentrierringen sowohl zur Verwendung in Luftfederachsen als auch zur Verwendung in Blattfederachsen geeignet ist, wobei die Längslenker der Luftfederachsen oder die Blattfedern der Blattfederachsen den Achskörper sowohl an der Oberseite als auch an der Unterseite kreuzen können. Dadurch wird die Lagerhaltung vor der Endmontage ganz erheblich reduziert.

Bei einer praktischen Ausführungsform können die Außenradien der konvex gerundeten Kanten des Achskörpers kleiner als die Innenradien der konkav geformten Druckflächen an den Achsplatten sein, so daß sich eine die spezifische Flächenpressung vermindernde, flächige Anlage beider Konstruktionsteile ergibt und linienförmige Auflagen mit Karbwirkung vermieden werden.

Die auf der Oberseite des Achskörpers befestigten, vorzugsweise angeschweißten Zentrierringe fixieren die Lenker- oder Federmitten und sind dazu bestimmt, die bei Kurvenfahrt auftretenden Seitenkräfte vom Achskörper über die Achseinbindung auf das Fahrgestell zu übertragen. Bei an der Oberseite den Achskörper kreuzenden Längslenkern oder Blattfedern, wenn die Federbügel von unten her diese Konstruktionsteile umgreifen, greifen die Zentrierringe in entsprechend geformte Ausnehmungen der Achsplatten ein. Wenn aber die Längslenker oder Blattfedern den Achskörper an der Unterseite kreuzen und die Federbügel diese Konstruktionsteile von oben her umgreifen, dann greifen die Zentrierringe in entsprechend geformte Ausnehmungen in den Füllstücken ein.

Weitere Einzelheiten und Vorteile ergeben sich aus der nachfolgenden Beschreibung der zugehörigen Zeichnungen, in denen mehrere Ausführungsformen einer erfindungsgemäß ausgebildeten Achseinbindung dargestellt worden sind. In den Zeichnungen zeigen:
- Fig. 1: eine Luftfederachse in Seitenansicht von der Innenseite her gesehen;
- Fig. 2: eine Blattfederachse in Seitenansicht von der Innenseite her gesehen;
- Fig. 3: einen vergrößerten Ausschnitt aus Fig. 1 für die Achseinbindung in Seitenansicht;
- Fig. 4: dieselbe Achseinbindung entlang der Linie IV-IV in Fig. 3 geschnitten;
- Fig. 5: einen vergrößerten Ausschnitt aus Fig. 3 zur Veranschaulichung der Anlageflächen zwischen Achskörper und Achsplatte in Seitenansicht und teilweise geschnitten;
- Fig. 6: eine Achseinbindung für eine Blattfederachse in Seitenansicht;
- Fig. 7: dieselbe Achseinbindung entlang der Linie VII-VII in Fig. 6 geschnitten;
- Fig. 8: eine Achseinbindung für den Achskörper an der Unterseite kreuzende Längslenker oder Blattfedern in Seitenansicht;
- Fig. 9: dieselbe Achseinbindung entlang der Linie IX-IX in Fig. 8 geschnitten;
- Fig. 10: einen vollständig vormontierten Achskörper von hinten in Fahrtrichtung gesehen;
- Fig. 11: denselben Achskörper in Draufsicht;
- Fig. 12: denselben Achskörper entlang der Linie XII-XII in Fig. 10 geschnitten.

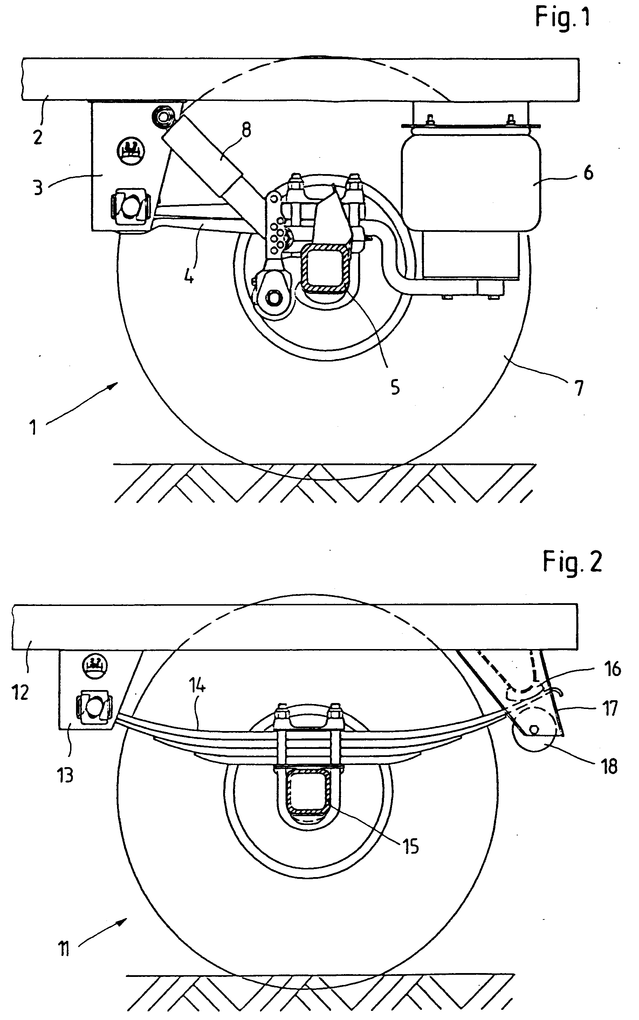

Bei der in Fig. 1 dargestellten Luftfederachse 1 sind unter einem Fahrzeugrahmen 2 Konsolen 3 befestigt, an denen als Federn ausgebildete Längslenker 4 für einen Achskörper 5 gelagert sind. Zwischen dem Fahrzeugrahmen 2 und dem rückwärtigen Ende der Längslenker 4 sind Luftfederbälge 6 angeordnet. Der Achskörper 5, an dem Räder 7 gelagert sind, ist unter einem vorderen, höher liegenden Federast der Längslenker 4 angeordnet, während sich die Luftfederbälge 5 auf tieferliegenden hinteren Federästen der Längslenker 4 abstützen. Zwischen den Konsolen 3 und dem Achskörper 5 ist auf jeder Seite ein Stoßdämpfer 8 angeordnet.

Bei der in Fig. 2 dargestellten Blattfederachse 11 sind unter einem Fahrzeugrahmen 12 Konsolen 13 angeordnet, an denen Blattfedern 14 für einen Achskörper 15 mit ihren vorderen Federästen angelegt sind. Mit ihren hinteren Federästen stützen sich die Blattfedern 14 an Gleitstücken 16 in Konsolen 17 ab. Unter den hinteren Federästen der Blattfeder 14 sind in den Konsolen 17 Stützrollen 18 gelagert.

Eine Achseinbindung für die Achskörper 5,15 besteht aus Achsplatten 21, Federplatten 22, Füllstücken 23, U-förmigen Federbügeln 24 und Sicherungsmuttern 25.

In der Mitte der Längslenker 4 bzw. der Blattfedern 14 ist auf dem Achskörper 5,15 ein Zentrierring 26 angeordnet, der in eine entsprechende, kreisrunde Ausnehmung 27 der Achsplatte 21 hineinragt.

Die Achsplatten 21 bestehen aus Formkörpern mit einem nach oben offenen, U-förmigen Querschnitt, der die Längslenker 4 bzw. Blattfedern 14 umgreift. Quer dazu sind die Achsplatten 21 auch an ihrer Unterseite U-förmig profiliert und liegen den konvex abgerundeten Kanten der Achskörper 5,15 mit konkav geformten Druckflächen 28 an. Die Außenradien der konvexen Kanten der Achskörper 5,15 sind geringfügig kleiner als die Innenradien der konkaven Druckfächen 28, so daß sich eine flächige Anlage der Achsplatten 21 am Achskörper 5,15 ergibt.

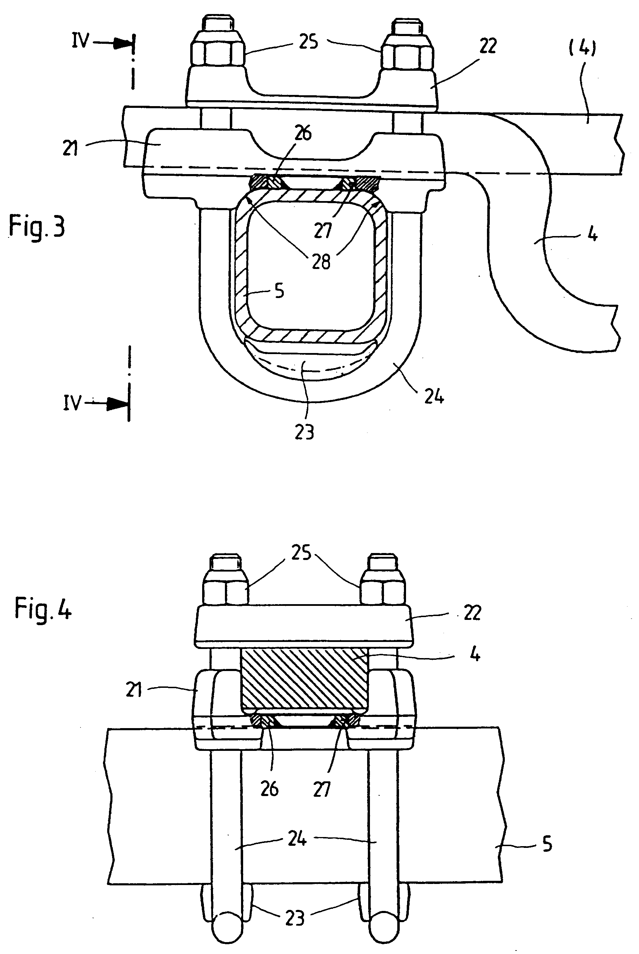

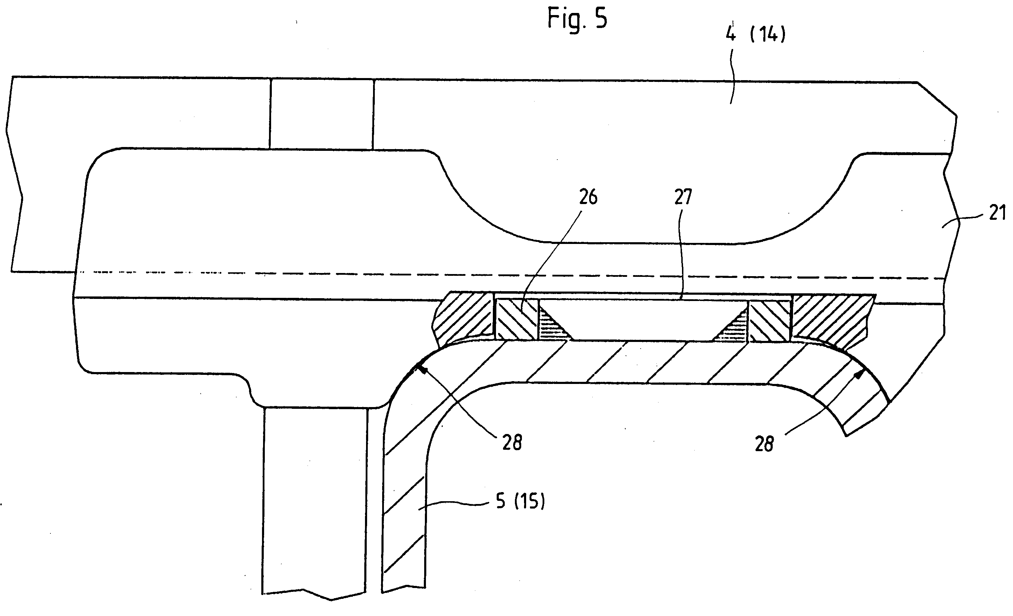

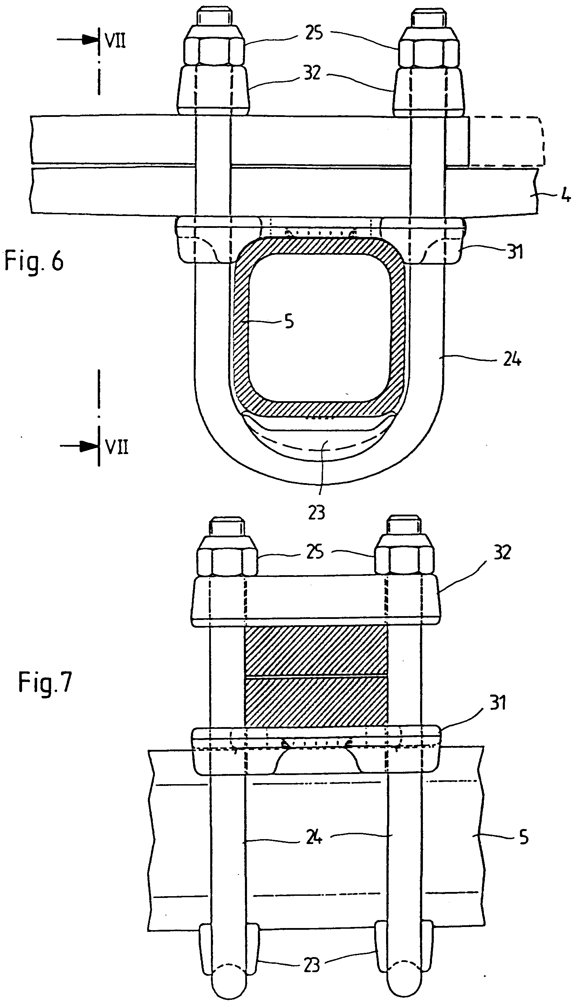

Bei der in den Fig. 6 und 7 dargestellten Achseinbindung sind die verwendeten Achsplatten 31 an ihrer den Längslenkern 4 anliegenden Oberseite glatt ausgebildet und die Federplatten 32 sind je Federbügelpaar 24 getrennt voneinander ausgebildet. Im übrigen stimmt diese Achseinbindung konstruktiv mit der in den Fig. 3 bis 5 dargestellten Achseinbindung überein.

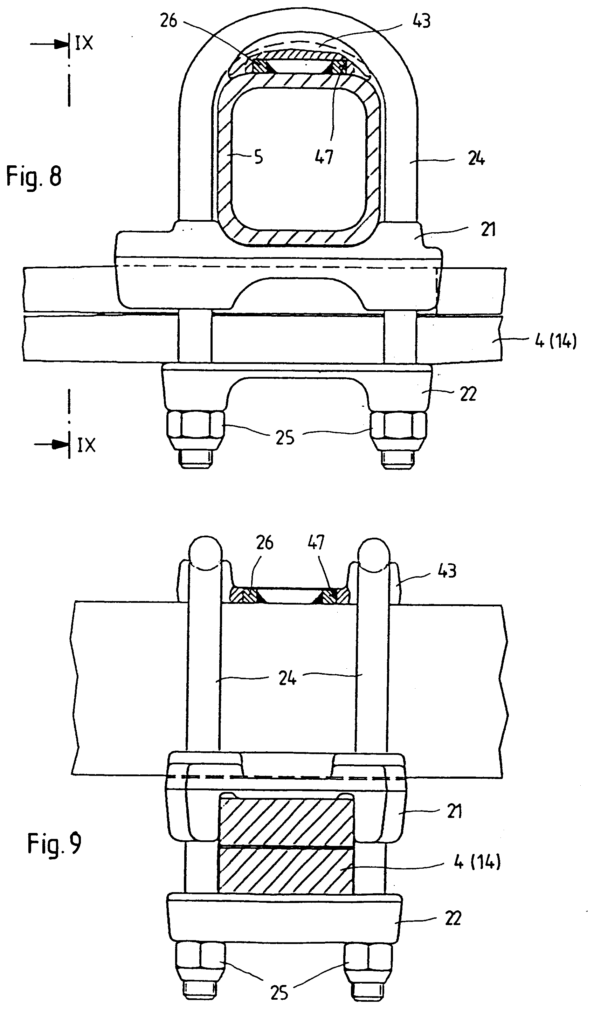

Bei der in den Fig. 8 und 9 dargestellten Achseinbindung ist der Achskörper 5,15 über den Längslenkern 4 bzw. Blattfedern 14 angeordnet. Während die Achsplatten 21, Federplatten 22, Federbügel 24 und Sicherungsmuttern 25 mit den entsprechenden Konstruktionsteilen bei der Achseinbindung nach den Fig. 3 bis 5 übereinstimmen, sind in den einteilig ausgebildeten Füllstücken 43 Ausnehmungen 47 für die Zentrierringe 26 angeordnet.

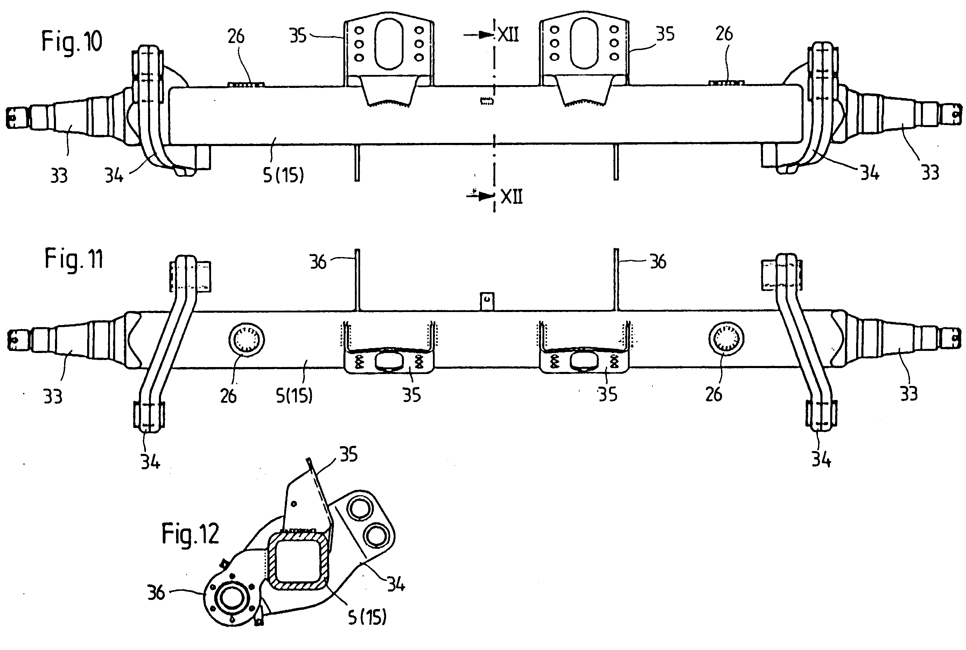

Der in den Fig. 10 bis 12 dargestellte, vormonierte Achskörper 5,15 kann sowohl für eine Luftfederachse 1 als auch für eine Blattfederachse 11 Verwendung finden. An den Enden sind Achsschenkel 33 angeformt. Zwischen den Zentrierringen 26 und den Achsschenkeln 33 sind auf dem Achskörper 5,15 Bremsbrücken 34 für die Lagerung von nicht dargestellten Bremswellen und Stützlagern befestigt. Zur Mitte hin sind Grundplatten 35 für die Montage nicht dargestellter Bremszylinder angeschweißt. Außerdem sind zur Mitte hin Lagerbleche für die inneren Enden der nicht dargestellten Bremswellen befestigt. Dieser vormontierte Achskörper 5,15 kann bevorratet und dann je nach Auftragseingang für die Endmontage von Luftfederachsen 1 oder Blattfederachsen 11 verwendet werden.

| **Bezugszeichenliste** | | | |
|---|---|---|---|
| 1 | Luftfederachse | 43 | Füllstück |
| 2 | Fahrzeugrahmen | | |
| 3 | Konsole | 47 | Ausnehmung |
| 4 | Längslenker | | |
| 5 | Achskörper | | |
| 6 | Luftfederbalg | | |
| 7 | Rad | | |
| 8 | Stoßdämpfer | | |
| 11 | Blattfederachse | | |
| 12 | Fahrzeugrahmen | | |
| 13 | Konsole | | |
| 14 | Blattfeder | | |
| 15 | Achskörper | | |
| 16 | Gleitstück | | |
| 17 | Konsole | | |
| 18 | Stützrolle | | |
| 21 | Achsplatte | | |
| 22 | Federplatte | | |
| 23 | Füllstück | | |
| 24 | Federbügel | | |
| 25 | Sicherungsmutter | | |
| 26 | Zentrierung | | |
| 27 | Ausnehmung | | |
| 28 | Druckfläche | | |
| 31 | Achsplatte | | |
| 32 | Federplatte | | |
| 33 | Achsschenkel | | |
| 34 | Bremsbrücke | | |
| 35 | Grundplatte | | |
| 36 | Lagerblech | | |

## Patentansprüche

1. Achseinbindung für Luft- (1) oder Blattfederachsen (11) mit einem als Vierkantrohr mit abgerundeten Kanten ausgebildeten Achskörper (5,15), den Achskörper (5,15) an der Ober- oder Unterseite kreuzenden Längslenkern (4) oder Blattfedern (14) sowie diese Konstruktionsteile unter Zwischenlage von Achsplatten (21), Federplatten (22) und Füllstücken (23) umgreifende, U-förmigen Federbügeln (24) mit Sicherungsmuttern (25),
**dadurch gekennzeichnet,**
daß die Achsplatten (21,31) den konvex abgerundeten Kanten des Achskörpers (5,15) mit entsprechend konkav geformten Druckflächen (28,) anliegen und
daß auf der Oberseite des Achkörpers (5,15) Zentrierringe (26) befestigt sind, die in entsprechend geformte Ausnehmungen (27,47) der Achsplatten (21) oder Füllstücke (43) eingreifen.

2. Achseinbindung nach Anspruch 1, dadurch gekennzeichnet, daß die Außenradien der konvex gerundeten Kanten des Achskörpers (5,15) kleiner als die Innenradien der konkav geformten Druckflächen (28) an den Achsplatten (21,31) sind.

3. Achseinbindung nach Anspruch 1, dadurch gekennzeichnet, daß die Zentrierringe (26) auf der Innenseite mit dem Achskörper (5,15) verschweißt sind.
